# EUROPEAN PATENT SPECIFICATION

(11) **EP 0 990 854 B1**
(45) Date of publication and mention of the grant of the patent: **16.06.2004**
(21) Application number: 99119296.4
(22) Date of filing: 28.09.1999
(51) Int. Cl.: F24C 5/00, F24C 3/00, F24F 13/06, F23M 11/00

(54) **Heater with slanting rectifying louvers**
Heizgerät mit rektifizierenden Schrägjalousien
Appareil de chauffage avec volets de redressement inclinés

(30) Priority: 29.09.1998 JP 27587298; 26.10.1998 JP 30364898
(43) Date of publication of application: 05.04.2000
(73) Proprietor: SANYO ELECTRIC CO., LTD., Moriguchi-shi, Osaka 570-0083 (JP)
(72) Inventor: Kuwako, Shigeru, Oota-shi, Gunma (JP); Arai, Takao, Kitamoto-shi, Saitama (JP); Hoshino, Satoshi, Ashikaga-shi, Tochigi (JP); Ogura, Nobuhiro, Kiryu-shi, Gunma (JP); Araki, Takashi, Oota-shi, Gunma (JP); Yamaguchi, Masashi, Oura-gun, Gunma (JP)
(74) Representative: Glawe, Delfs, Moll & Partner

(56) References cited:
- US-A- 3 870 052
- US-A- 4 608 010
- US-A- 4 688 546
- US-A- 5 624 313
- PATENT ABSTRACTS OF JAPAN vol. 011, no. 318 (M-632), 16 October 1987 (1987-10-16) & JP 62 102038 A (MATSUSHITA ELECTRIC IND CO LTD), 12 May 1987 (1987-05-12)
- PATENT ABSTRACTS OF JAPAN vol. 010, no. 277 (M-519), 19 September 1986 (1986-09-19) & JP 61 099020 A (DOWA:KK), 17 May 1986 (1986-05-17)
- PATENT ABSTRACTS OF JAPAN vol. 011, no. 339 (M-639), 6 November 1987 (1987-11-06) & JP 62 119362 A (MATSUSHITA ELECTRIC IND CO LTD), 30 May 1987 (1987-05-30)

## Description

### BACKGROUND OF THE INVENTION

### 1. Field of the Invention

The present invention relates to heaters containing oil (kerosene, etc.) warm air heaters such as an oil fan heater, etc., gas warm air heaters such as a gas fan heater, etc., an open type oil heater, etc., and particularly to heaters each having rectifying louvers.

### 2. Description of the Related Art

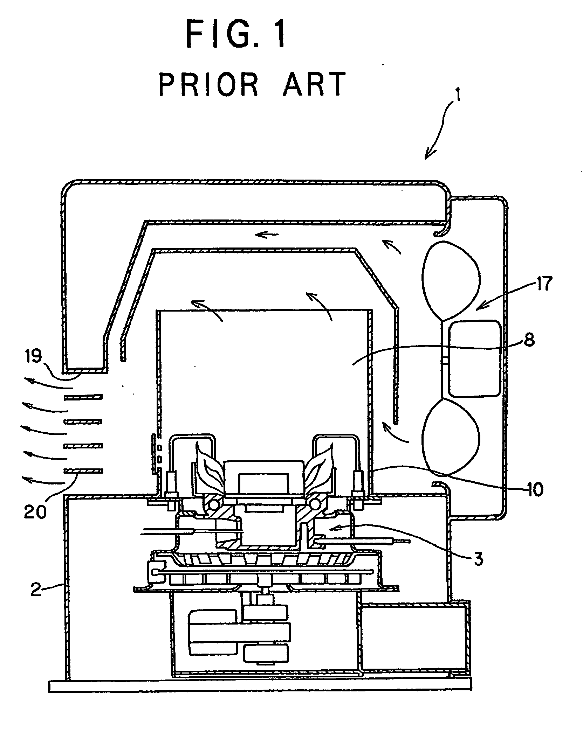

Fig. 1 is a cross-sectional view showing a conventional oil fan heater.

As shown in Fig. 1, the conventional oil fan heater 1 is mainly designed so that a burner 3, a burning cylinder 10, an air blower 17 for convection (hereinafter referred to as "convection blower") are fabricated in a casing 2 and a plurality of (in Fig. 1, four) lateral louvers 20 are horizontally provided at an air blow-out port 19 formed in a front panel of the casing 2. When an operation ON switch of the oil fan heater 1 is turned on, the burning (combustion) is started by the burner 3 to increase the temperature of the air in a burning chamber 8 (which is defined as an inner space surrounded by the burning cylinder 10). At the same time, the convection blower 17 is rotated so that the high-temperature air (warm air) in the burning chamber 8 flows forwardly and then blown out from the blow-out port 19, thereby performing heating operation.

Such a heater is e.g. known from document JP-A-6221679.

In the above structure, the lateral louvers 20 of the blow-out port 19 are arranged in the horizontal direction, and thus the warm air is horizontally guided along the lateral louvers 20 and blown out in the horizontal direction. However, the warm air is inherently liable to ascend, that is, the warm air blown out from the blow-out port flows upwardly. Therefore, the warm air cannot be fed to a distance from the conventional fan heater. Accordingly, the temperature distribution in the room is inhomogeneous, and the room temperature at the ceiling is higher than that at the floor. In order to avoid such a temperature-inhomogeneous situation in the room, it may be considered that the lateral louvers for determining the flow direction of the warm air blown out from the blow-out port 19 are arranged so as to face downwardly. In this case, however, the warm air is directly blown out to the surface of the floor just near to the blow-out port 19, and thus the floor surface is locally (concentratively) excessively heated by the warm air.

The same problem is applied to not only the oil fan heater 1, but also other types of oil warm air heaters, gas warm air heaters such as a gas fan heater, etc.

### SUMMARY OF THE INVENTION

The present invention has been implemented in view of the foregoing situation, and has an object to provide a heater which can feed warm air to a distance to make the indoor temperature homogeneous in the room with preventing the temperature from locally rising up from the floor surface, thereby enhancing comfortableness (making users feel more comfortable) under heating operation.

In order to attain the object, according to the present invention, there is provided a heater including a casing having an air blow-out port, a burner, a burning cylinder disposed above the burner, a radiation shielding plate disposed above the burning cylinder to form a warm air passage between the burning cylinder and the radiation shielding plate so that the warm air passage intercommunicates with the lower portion of the air blow-out port, a partition plate disposed above the radiation shielding plate to form a cool air passage between the radiation shielding plate and the partition plate so that the cool air passage intercommunicates with the upper portion of the air blow-out port, and a convection blower for blowing air to the warm air passage and the cool air passage, all of the burner, the burning cylinder, the radiation shielding plate, the partition plate and the convection blower being accommodated in the casing, characterized in that plural lateral louvers are provided at the lower portion of the air blow-out port so as to be arranged in a horizontal direction, and plural rectifying louvers each having a larger area than each of the lateral louvers are provided at the upper portion of the air blow-out port so as to face in an obliquely downward direction.

According to the heater of the present invention, the relatively high temperature air (warm air) blown out from the lower portion of the air blow-out port is pressed down from the upper side by the relatively low temperature air (cool air) which is blown out in the form of laminar flow from the upper portion of the air blow-out port, thereby suppressing the ascending of the warm air, and also the rectifying louvers each having a relatively wide area act on the relatively low temperature cool air so that the cool air is kept to stably flow in an obliquely downward direction at an angle.

### BRIEF DESCRIPTION OF THE DRAWINGS

Fig. 1 is a cross-sectional view showing a conventional oil fan heater;
Fig. 2 is a diagram showing the outlook of an oil fan heater (warm air heater) according to an embodiment according to the present invention;
Fig. 3 is a cross-sectional view showing the inside of the oil fan heater shown in Fig. 2;
Fig. 4 is a cross-sectional view showing the positional relationship between rectifying louvers and lateral louvers shown in Fig. 3.

### DETAILED DESCRIPTION OF THE PREFERRED EMBODIMENTS

Preferred embodiments according to the present invention will be described hereunder with reference to the accompanying drawings.

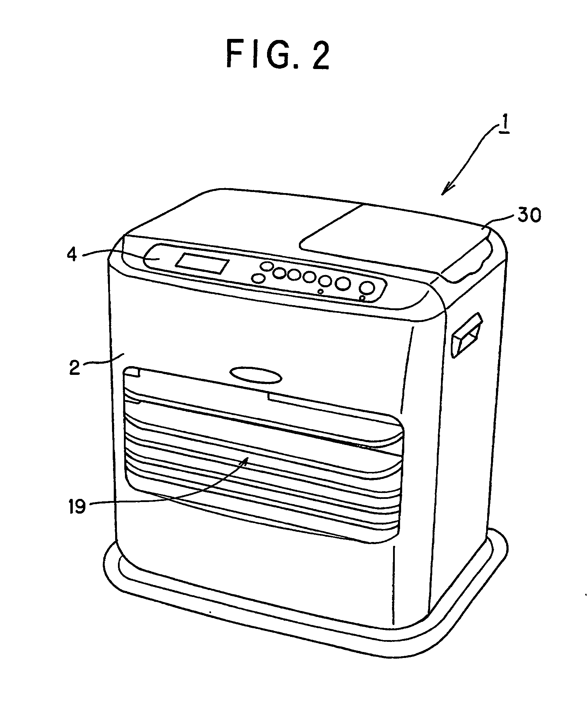

Fig. 2 is a diagram showing the outlook of an oil fan heater of an embodiment to which the present invention is applied.

In Fig. 2, the oil fan heater 1 includes a casing 2 serving as the main body of the oil fan heater 1. A lid 30 through which a cartridge tank (not shown) is loaded/unloaded and an operation panel 4 having various switches and a liquid crystal display panel are provided on the upper surface of the casing 2. Reference numeral 19 represents an air blow-out port through which warm air is blown out.

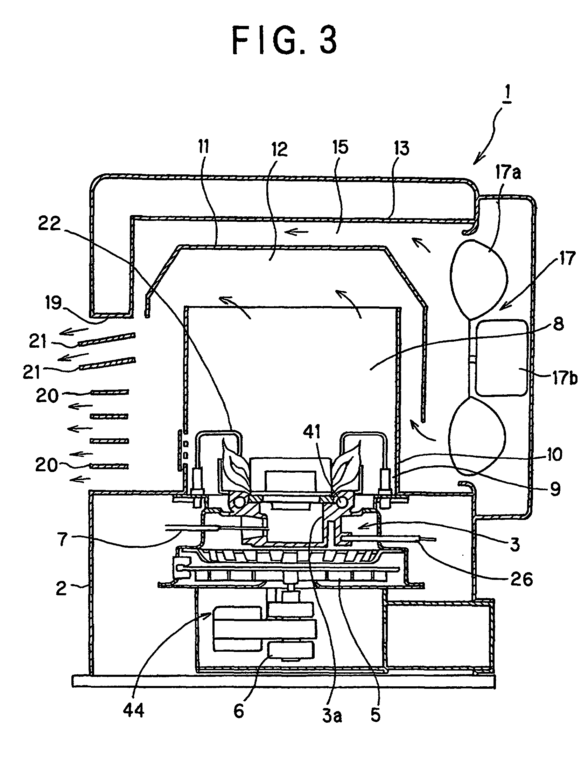

Fig. 3 is a cross-sectional view showing the oil fan heater (warm air heater) shown in Fig. 2. The same parts as shown in Fig. 1 are represented by the same reference numerals.

As shown in Fig. 3, the oil fan heater 1 includes the casing 2, and an air blower (fan) 44 for combustion (burning) comprising a burner fan 5 and a burner motor 6 is disposed in the casing 2. The burner fan 5 is rotatably supported by the burner motor 6. Further, a burner 3 is disposed above the burner fan 5, and an oil feeding nozzle 7, a ignition plug 9, etc. are secured to the burner 3. A burning cylinder 10 is mounted above the burner 3 so as to form a burning chamber therein, and a radiation shielding plate 11 is disposed above the burning cylinder 10 to form a warm air passage 12 between the radiation shielding plate 11 and the burning chamber 8 so that the warm air passage intercommunicates with the lower portion of the air blow-out port 19. Further, a partition plate 13 is disposed above the radiation shielding plate 11 to form a cool air passage 15 between the partition plate 13 and the radiation shielding plate 11 so that the cool air passage intercommunicates with the upper portion of the air blow-out port 19. An air blower 17 for convection (hereinafter referred to as "convection blower") is disposed behind (in Fig. 3, at the right side of) the burning cylinder 10, and the convection blower 17 is provided with an air blowing fan 17a and a driving motor 17b for driving the air blowing fan 17a.

The air blow-out port 19 is formed in the front surface (in Fig. 3, the left surface) of the casing 2 so as to be located at the front side of the burning cylinder 10. A plurality of (in Fig. 3, four) lateral louvers 20 which are parallel to one another are fixed at the lower portion of the air blow-out port 19 so as to be arranged in a horizontal direction, and a plurality of (in Fig. 3, two) rectifying louvers 21 which are parallel to each other are fixed at the upper portion of the air blow-out port 19 so as to be arranged in an obliquely downward direction as shown in Fig. 3. Each rectifying louver 21 is designed to have a larger area than each lateral louver 20 and to be longer than each lateral louver 20 so that both of the front and rear ends of each rectifying louver 21 are located ahead of and behind the front and rear ends of each lateral louver 20, respectively as described later.

Next, the room heating operation of the oil fan heater thus constructed will be described.

When a user wishes to heat his/her room by using the oil fan heater 1 thus constructed, the user first turns on an operation ON switch. At this time, the burner fan 5 of the burning air blower 44 is rotated by the burner motor 6 to feed the burning air to the burner 3. At the same time, fuel such as kerosene or the like is injected from the oil feed nozzle 7 into the burner 3 and vaporized. The vaporized gas of the fuel is mixed with burning air, and ignited by the ignition plug 9 to produce flames and start the burning process, so that the temperature of the air in the burning chamber 8 rises up. Under this state, the air blow-out fan 17a of the convection air blower 17 is rotated by the driving motor 17b to blow the air toward the warm air passage 12 and the cool air passage 15. At this time, a part of the air passes through the cool air passage 15 and arrives at the rear side (right side in Fig. 3) of the rectifying louvers 21. The remaining part of the air passes through the warm air passage 12 while guiding high-temperature air in the burning chamber 8 and arrives at the rear side (right side in Fig. 3) of the lateral louvers 20. As a result, the warm air is finally blown out from the air blow-out port 19 while guided along the lateral louvers 20 and the rectifying louvers 21, thereby heating the room.

At this time, the warm air from the warm air passage 12 and the cool air from the cool air passage 15 are mixed with each other at the front side (left side in Fig. 3) of the air blow-out port 19. However, since the warm air is blown out to the front side (left side in Fig. 3) of the lateral louvers 20 and the cool air is blown out to the front side (left side in Fig. 3) of the rectifying louvers 21, so that the relatively high temperature air (warm air) is blown out from the lower portion of the air blow-out port 19 while the relatively low temperature air (cool air) is blown out from the upper portion of the air blow-out port 19. In addition, since the two rectifying louvers 21 are arranged in parallel to each other, the relatively low temperature air blown out from the upper portion of the air blow-out port 19 forms laminar flow. Further, since the area of each rectifying louver 21 is larger than that of each lateral louver 20, the relatively low temperature air blown out from the upper portion of the air blow-out port 19 is kept to stably flow in an obliquely downward direction at an angle. Accordingly, the relatively high temperature air is pressed down from the upper side by the relatively low temperature air and prevented from ascending, so that the relatively high temperature air can be fed to a distance. As a result, the non-uniformity of the indoor temperature can be corrected, and the difference between the room temperature at the ceiling and the room temperature at the floor is reduced, so that the user can feel more comfortable in the room during the heating operation.

In addition, the relatively high temperature air guided by the lateral louvers 20 is not blown out in the obliquely downward direction, but blown out in the horizontal direction, so that the temperature of the floor surface can be prevented from being locally increased due to the heat of the relatively high temperature air.

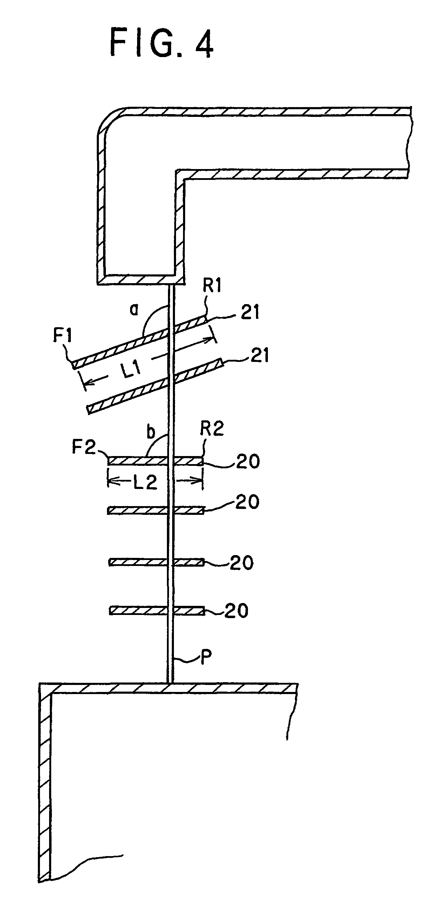

Further, since the rectifying louvers 21 are designed so that the front end (F1 in Fig. 4) of each rectifying louver 21 is located ahead of the front end (F2 in Fig. 4) of each lateral louver 20, the relatively low temperature air blown out from the upper portion of the air blow-out port 19 flows ahead of the relatively high temperature air blown out from the lower portion of the air blow-out port 19. In addition, since the rectifying louvers 21 are designed so that the rear end (R1) of each rectifying louver 21 is located behind the rear end (R2) of each lateral louver 20, the cool air from the cool air passage 15 is more liable to be taken by each rectifying louver 20, and thus the relatively high temperature air and the relatively low temperature air can be more easily separated from each other, thereby remarkably enhancing the press effect of the warm air. Here, the "front end" of each louver means the distal end of the outside portion of each louver (in Fig. 4, the left side portion of each louver) with respect to a mount plate P, and the "rear end" of each louver means the distal end of the inside portion of each louver (in Fig. 4, the right side potion of each louver) with respect to the mount plate P).

Fig 4 is an enlarged view showing an arrangement of each rectifying louver 21 and each lateral louver 20. In Fig. 4, P represents a mount plate to which the rectifying louvers 21 and the lateral louvers 20 are secured. In Fig. 4, a represents a mount angle at which each rectifying louver 21 is secured to the mount plate, and b represents a mount angle at which each lateral louver 20 is secured to the mount plate. Usually, the angle b is set to 90 degrees. Each rectifying louver 21 is generally secured to the mount plate P so that the following inequality: b<a is satisfied, and it is preferable that each rectifying louver 21 is secured to the mount plate P so that the following inequality: 95° ≦ a ≦ 115° is satisfied although this range is dependent on the length of each of the rectifying louvers and the lateral louvers. Further, the area of each rectifying louver 21 is set to be larger than the area of each lateral louver 20. Further, it is preferable that the ratio of the length (L1) of each rectifying louver 21 to the length (L2) of each lateral louver 20 in the forward-and-backward direction is preferably set to 1.1 to 1.3, and it is most preferable that the ratio is set to 1.17.

In this embodiment, the present invention is applied to an oil fan heater 1, but the present invention may be applied to warm air heaters (for example, a gas fan heater, etc.) other than the oil fan heater insofar as they can blow out warm air to heat the room.

As described above, according to the above embodiment, the heater includes the casing having the air blow-out port therein, the burner, the burning cylinder disposed above the burner, the radiation shielding plate disposed above the burning cylinder to form the warm air passage between the burning cylinder and the radiation shielding plate so that the warm air passage intercommunicates with the lower portion of the air blow-out port, the partition plate disposed above the radiation shielding plate to form the cool air passage between the radiation shielding plate and the partition plate so that the cool air passage intercommunicates wit the upper portion of the air blow-out port, and the convection air blow-out port for blowing air to the warm air passage and the cool air passage, all of the burner, the burning cylinder, the radiation shielding plate, the partition plate and the convection air blow-out port being accommodated in the casing, and is characterized in that plural lateral louvers are horizontally provided at the lower portion of the air blow-out port, and plural rectifying louvers each having a larger area than each of the lateral louvers are provided at the upper portion of the air blow-out port so as to face in an obliquely downward direction. Therefore, the relatively high temperature air (warm air) blown out from the lower portion of the air blow-out port is pressed down from the upper side. by the relatively low temperature air (cool air) blown out as laminar flow from the upper potion of the air blow-out port to prevent the relatively high temperature air from ascending. In addition, the relatively low temperature air (cool air) can be kept to stably flow in an obliquely downward direction at an angle by the rectifying louvers each having a larger area to feed the warm air to a distance and make the indoor temperature uniform while preventing the local increase of the temperature of the floor surface, so that the comfortableness under the heating operation can be enhanced.

Further, since the rectifying louvers are designed so that the front end of each rectifying louver is located ahead of the front end of each lateral louver, the relatively low temperature air blown out from the upper portion of the blow-out port flows ahead of the relatively high temperature air blown out from the lower potion of the blow-out port and thus the above press-down effect is enhanced, so that the comfortableness under the heating operation can be further enhanced.

Still further, since the rear end of each rectifying louver is located behind the rear end of each lateral louver, the cool air from the cool air passage is more liable to be taken into the upper portion of the air blow-out port and thus the press-down effect is enhanced, whereby the comfortableness under the heating operation is further enhanced.

In the above embodiment, the number of the rectifying louvers is equal to 2, and the number of the lateral louvers is equal to 4. However, the number of the rectifying louvers and the number of the lateral louvers of the present invention are not limited to the above specific values, and any number may be adopted insofar as the same press-down effect can be attained.

## Claims

1. A heater (1) including a casing (2) having an air blow-out port (19), a burner (3), a burning cylinder (10) disposed above said burner (3), a radiation shielding plate (11) disposed above said burning cylinder (10) to form a warm air passage (12) between said burning cylinder (10) and said radiation shielding plate (11) so that the warm air passage (12) intercommunicates with the lower portion of said air blow-out port (19), a partition plate (13) disposed above said radiation shielding plate (11) to form a cool air passage (15) between said radiation shielding plate (11) and said partition plate (13) so that said cool air passage (15) intercommunicates with the upper portion of said air blow-out port (19), and a convection blower for blowing (17) air to said warm air passage (12) and said cool air passage (15), all of said burner (3), said burning cylinder (10), said radiation shielding plate (11), said partition plate (13) and said convection blower (17) being accommodated in said casing (2), **characterized in that** plural lateral louvers (20) are arranged at the lower portion of said air blow-out port (19) so as to face in a horizontal direction, and plural rectifying louvers (21) each having a larger area than each of said lateral louvers (20) are arranged at the upper portion of said air blow-out port (19) so as to face in an obliquely downward direction.

2. The heater (1) as claimed in claim 1, wherein the front end of each of said rectifying louvers (21) is located ahead of the front end of each of said lateral louvers (20).

3. The heater (1) as claimed in claim 1, wherein the rear end of each of said rectifying louvers (21) is located behind the rear end of each of said lateral louvers (20).

4. The heater (1) as claimed in claim 1, wherein said rectifying louvers (21) are arranged so that an oblique angle a at which the arrangement direction of said rectifying louvers (21) intersects to the direction perpendicular to the arrangement direction of said lateral louvers (20) satisfies the following inequality: 95° ≦ a ≦ 115°.

5. The heater (1) as claimed in claim 1, wherein the ratio (L1/L2) of the length (L1) of each rectifying louver (21) in the forward-and-backward direction to the length (L2) of each lateral louver (20) in the forward-and-backward direction is set to 1.1 to 1.3.

6. The heater (1) as claimed in claim 5, wherein the ratio (L1/L2) is set to 1.17.

## Patentansprüche

1. Heizgerät (1) mit einem Gehäuse mit einem Luftauslass (19), einem Brenner (3), einem Brennerzylinder (10), der oberhalb des Brenners angeordnet ist, einer Strahlungsabschirmplatte (11), die oberhalb des Brennerzylinders (10) angeordnet ist, zur Bildung einer Warmluftpassage (12) zwischen dem Brennerzylinder (10) und der Strahlungsabschirmungsplatte (11), sodass die Warmluftpassage (12) mit dem unteren Teil des Luftauslasses (19) in Verbindung steht, einer Teilungsplatte (13), die oberhalb der Strahlungsabschirmplatte (11) angeordnet ist, um eine Kaltluftpassage (15) zwischen der Strahlungsabschirmplatte (11) und der Teilungsplatte (13) so zu bilden, dass die Kaltluftpassage (15) mit dem oberen Teil des Luftauslasses (19) in Verbindung steht, und einem Konvektionsgebläse (17) zum Blasen von Luft zu der Warmluftpassage (12) und der Kaltluftpassage (15), wobei sowohl der Brenner (3), der Brennerzylinder (10), die Strahlungsabschirmplatte (11), die Teilungsplatte (13) und das Konvektionsgebläse (17) in dem Gehäuse (2) aufgenommen sind, **dadurch gekennzeichnet, dass** eine Anzahl von Lamellen (20) am unteren Teil des Luftauslasses (19) so angeordnet sind, dass sie in eine horizontale Richtung weisen, und dass eine Anzahl von Korrekturlamellen (61) mit jeweils einer größeren Fläche als jede der Seitenlamellen (20) im oberen Teil des Luftauslasses (19) so angeordnet sind, dass sie in einer nach unten geneigte Richtung weisen.

2. Heizgerät (1) nach Anspruch 1, wobei das Vorderende jeder der Korrekturlamellen (21) oberhalb des Vorderendes jeder der Seitenlamellen (20) angeordnet ist.

3. Heizgerät (1) nach Anspruch 1, wobei das Rückende jeder der Korrekturlamellen (21) hinter dem Rückende jeder der Seitenlamellen (20) angeordnet ist.

4. Heizgerät (1) nach Anspruch 1, wobei die Korrekturlamellen (21) so angeordnet sind, dass ein Schrägwinkel, in dem die Anordnungsrichtung der Korrekturlamellen (20) sich mit der Richtung rechtwinklig zur Anordnungsrichtung der Seitenlamellen (20) schneidet, die folgende Ungleichung erfüllt: 95° ≤ a ≤ 115°.

5. Heizgerät (1) nach Anspruch 1, wobei das Verhältnis (L1/L2) der Länge (L1) jeder Korrekturlamelle (21) in der Vorwärts- und Rückwärtsrichtung zur Länge (L2) jeder Seitenlamelle (20) in der Vorwärts- und Rückwärtsrichtung auf 1,1 bis 1,3 eingestellt ist.

6. Heizgerät (1) nach Anspruch 5, wobei das Verhältnis (L1/L2) auf 1,17 eingestellt ist.

## Revendications

1. Appareil de chauffage (1) qui comprend un caisson (2) ayant une ouverture de soufflage de sortie d'air (19), un brûleur (3), un cylindre de combustion (10) disposé au-dessus du dit brûleur (3), une plaque d'écran de rayonnement (1) disposée au-dessus du dit cylindre de combustion (10) de manière à définir un passage d'air chaud (12) entre le dit cylindre de combustion (10) et la dite plaque d'écran de rayonnement (11) de sorte que le passage d'air chaud (12) communique avec la partie inférieure de la dite ouverture de soufflage d'air (19), une plaque de cloison (13) disposée au-dessus de la dite plaque de rayonnement (11) de manière à définir un passage d'air froid (15) entre la dite plaque d'écran de rayonnement (11) et la dite plaque de cloison (13) de sorte que le dit passage d'air froid (15) communique avec la partie supérieure de la dite ouverture de soufflage d'air (19), et un ventilateur de convection (17) pour souffler de l'air vers le dit passage d'air chaud (12) et le dit passage d'air froid (15), l'ensemble comprenant le dit brûleur (3), le dit cylindre de combustion (10), la dite plaque d'écran de rayonnement (11), la dite plaque de cloison (13) et le dit ventilateur de convection (17) étant logé dans le dit caisson (2), **caractérisé en ce que** plusieurs volets latéraux (20) sont disposés à la partie inférieure de la dite ouverture de soufflage d'air (19) de façon à êtr orientés dans une direction horizontale, et plusieurs volets de redressement (21) ayant chacun une plus grande surface que chacun des dits volets latéraux (20) sont disposés à la partie supérieure de la dite ouverture de soufflage d'air (19) de façon à être orientés dans une direction oblique vers le bas.

2. Appareil de chauffage (1) selon la revendication 1, dans lequel l'extrémité avant de chacun des dits volets de redressement (21) est située en avant de l'extrémité avant de chacun des dits volets latéraux (20).

3. Appareil de chauffage (1) selon la revendication 1, dans lequel l'extrémité arrière de chacun des dits volets de redrssement (21) est située en arrière de l'extrémité arrière de chacun des dits volets latéraux (20).

4. Appareil de chauffage (1) selon la revendication 1, dans lequel les dits volets de redressement (21) sont agencés de sorte qu'un angle d'inclinaison (a), suivant lequel la direction d'agencement des dits volets de redressement (21) coupe la direction perpendiculaire à la direction d'agencement des dits volets latéraux (20) satisfait à l'inégalité suivante : 95° ≦ a ≦ 115°.

5. Appareil de chauffage (1) selon la revendication 1, dans lequel le rapport (L1 / L2) de la longueur (L1) de chaque volets de refroidissement (21) dans la direction avant - arrière à la longueur (L2) de chaque volet latéral (20) dans la direction avant - arrière est fixé entre 1,1 et 1,3.

6. Appareil de chauffage (1) selon la revendication 5, dans lequel le rapport (L1 / L2) est fixé à 1,17.
